# EUROPEAN PATENT SPECIFICATION

(11) **EP 2 955 160 B1**
(45) Date of publication and mention of the grant of the patent: **31.07.2019**
(21) Application number: 15170454.1
(22) Date of filing: 03.06.2015
(51) Int. Cl.: C02F 1/40, B01D 17/02, E02B 15/10, C02F 101/32

(54) **PURIFICATION DEVICE FOR REMOVING IMPURITIES FROM THE SURFACE OF WATER**
REINIGUNGSVORRICHTUNG ZUR ENTFERNUNG VON VERUNREINIGUNGEN VON DER OBERFLÄCHE DES WASSERS
DISPOSITIF DE PURIFICATION POUR ENLEVER DES IMPURÉTÉS DE LA SURFACE DE L'EAU

(30) Priority: 10.06.2014 FI 20145533
(43) Date of publication of application: 16.12.2015
(73) Proprietor: Lamor Corporation AB, 06450 Porvoo (FI)
(72) Inventor: Larsen, Fred, 06150 Porvoo (FI)
(74) Representative: Papula Oy

(56) References cited:
- WO-A1-2011/160645
- GB-A- 1 402 635
- JP-A- 2009 189 979
- US-A- 5 713 697

## Description

### FIELD OF THE INVENTION

The invention relates to a purification device for removing impurities from the surface of the water. In particular, the invention is intended for removing oil and comparable substances from the water. Strictly speaking, the device is developed to purify waters circulating in industrial processes and, consequently, its target applications are mainly water purification and clarification basins, in which the surface of the water is calm and flat. A target application can, however, also be, for example, relatively closed dock basins, protected bays and equivalents.

### BACKGROUND OF THE INVENTION

Removing oil and corresponding impurities from the surface of the water is currently based primarily on different kinds of rotating brushes or skimmers. These are efficient and fast in a relatively thick layer of oil. However, as the brushes rotate, they go into the water on each rotation, thus to them also attaches water, which in the purification comb separates along with the collected oil. If there is very little oil, the water content of the collected fluid grows even higher.

In the same manner, as the head of the suction pipe is inserted to the surface of the fluid to be purified, depending on the thickness of the impurities, more or less water gets into the suction pipe along with the impurities. And the more water the removed fluid contains, the harder and more expensive is its further processing.

### OBJECT OF THE INVENTION

The object of the invention is to obviate above said disadvantages of known art. In particular, the object of the invention is to disclose a novel device using which from the surface of the water can be removed different kinds of floating impurities and, in particular, oil-like impurities with almost no water.

### SUMMARY OF THE INVENTION

A device according to the invention is based on the realization that floating impurities on the surface of the water can be processed without mechanically touching them in any way. Thus, they can also be processed without that it be necessary to mix the impurities in any way with the water below them.

Consequently, a purification device according to the invention has a suction device provided with a suction canal, the vertical sheath forming the suction canal of which has a vertically narrow and horizontally wide suction slit, which is above the surface of the water to be processed. Further, below the suction slit, suitably supported by the sheath, is an underwater control surface uniformly rising from the horizontal upwards either linearly or curvilinearly towards the suction slit, along which the air flow directed towards the suction slit pulls along with it impurities on the surface of the water. Thus, in a construction according to the invention, the suction of the suction device does not directly focus on the impurity to be removed, instead by focussing the suction as horizontal in the plane of the surface of the water the air above the impurities is made to move and, along with it, the impurities.

The suction slit is a horizontal and straight slit precisely parallel with the surface of the water, the lower edge of which can be either precisely in the plane of the surface of the water or also somewhat above it. The slit is of a uniform height such that suction is equally strong along the entire width of the slit. The vertical suction canal and its sheath including the slit can vary in their shape in different embodiments. It can be a pipe, wherein the slit can extend around the entire pipe. Likewise, the sheath can be a straight vertical wall with a horizontal slit of given length. It is essential that the suction slit is vertical, i.e. its straight lower edge and upper edges are parallel with the surface of the water and its edges are perpendicular to the surface of the water. Thus, the suction in the suction slit causes parallel with the surface of the water a strong suction air flow to the surface of the water in front of the suction slit.

The control surface below the suction slit begins then substantially horizontal at a given distance from the suction slit and below the lower edge of the suction slit and below the surface of the water such that the impurities moving towards the suction slit on the surface of the water are initially free to flow on top of it. As the control surface curves or rises linearly to the oblique, then upwards to the surface of the water and even to above the surface to the lower edge of the suction slit, the impurities move along the control surface due to the air flows in front of the suction slit, from which the suction pulls them through the suction slit into the suction device being used. As the control surface guides the impurities floating on the surface of the water, such as oil, upwards along with the suction air flow, at the same time it prevents rising of the heavier water upwards towards the suction slit. Regardless of the shape and length of the slit, the control surface extends below the slit to the entire horizontal length of the slit.

Most preferably, the suction device is a pneumatic injector pipe, in which by using a powerful air jet a suction air flow is created in the suction slit, into which air flow the impurities to be removed from the surface of the water become mixed. In the exhaust pipe of the injector pump and downstream, the impurities and air separate by themselves as the impurities drain into a suitable container.

According to the invention, the purification device has, disposed in the water to be treated, a flow device, such as a propeller, for directing the flow of the water towards the suction slit. The flow device is, most preferably, adequately deep or otherwise arranged such that it does not mix together the water and the impurities on its surface, but instead moves the water uniformly towards the suction slit, wherein the impurities are carried along.

The purification device has an air blowing device, such as an air knife, arranged to focus an air jet to move impurities floating on the surface of the water towards the suction slit. The air jet is focussed on the impurities on the surface of the water at a suitably oblique angle, for example 10-45°, such that it does not mix the impurities into the water, but instead moves them steadily towards the suction slit. Most preferably, an air knife is used, having a uniformly thick and long, narrow slit, which creates a uniform and turbulence-free curtain of air, using which the impurities are pushed towards the suction slit.

The suction slit of the purification device is, preferably, only a few millimetres in height, for example, between 3-8 mm. A purification device according to the invention requires calm, waveless water for it to function. Consequently, the purification device is, most preferably, arranged in a purification basin or equivalent limited areas existing in connection with the water circulation of a processing industry. A calm, mirror-like surface also allows the removal of very thin membrane-like oil surfaces.

In a purification impurities are removed from the surface of the water by suctioning with a suction device. To the surface of the water in its immediate vicinity, i.e. in contact with impurities on the surface of the water, is arranged a horizontal suction air flow, which moves along with it the impurities on the surface of the water towards the suction slit of the suction device. Once they have gotten into the suction slit, the impurities are then sucked away along with the suction air flow. Thus the impurities are not directly sucked from the surface of the water, which would not be possible without water coming along, instead by moving only air there occurs on the interface of the impurities and the flowing air a transfer of the kinetic energy of the air to the impurities, wherein only the uppermost layer from the water or the impurities therein move in the desired direction.

The movement of the impurities towards the suction slit is enhanced by causing the water to be purified to flow towards the suction slit, wherein also the impurities of the surface of the water move along with the water towards the suction opening.

The movement of the impurities towards the suction slit is enhanced by focusing onto the surface of the water an air jet directed towards the suction slit. The air jet is focussed in a suitably gentle oblique angle to the impurities of the surface of the water such that the impurities do not mix into the water, instead only move without mixing along the surface of the water in the desired direction, i.e. towards the suction slit.

All three means are used together, i.e. towards the suction in the suction slit are moved impurities by using an air jet as well as by calmly moving the water below.

The method is particularly developed for the separation and removal of oil on the surface of the water and it can successfully remove from the surface of the water both thick layers of oil and also very thin membranes of oil. A method functions best in intervals such that the flow of the water and the air jets are used continuously, but the suction occurring through the suction slit is used intermittently always then, when in front of the suction slit has gathered an adequately thick layer of impurities. In this manner, it is avoided that the suction flow would pull along with it a significant amount of water. Intermittent function can be arranged by manual control as needed, automatically at given intervals or by measuring with a suitable technique the thickness of the impurity layer gathering in front of the suction slit.

### ADVANTAGES ACHIEVED BY THE INVENTION

A purification device according to the invention has significant advantages in comparison to known art. Using the invention, from the surface of the water can very precisely be separated even very thin oil layers and membranes without that along comes significantly much water. This enables efficient circulation of water in industrial processes without significant need for new water. At the same time, it decreases significantly the volume of separated impurities and, consequently, also their processing expenses.

### BRIEF DESCRIPTION OF THE DRAWINGS

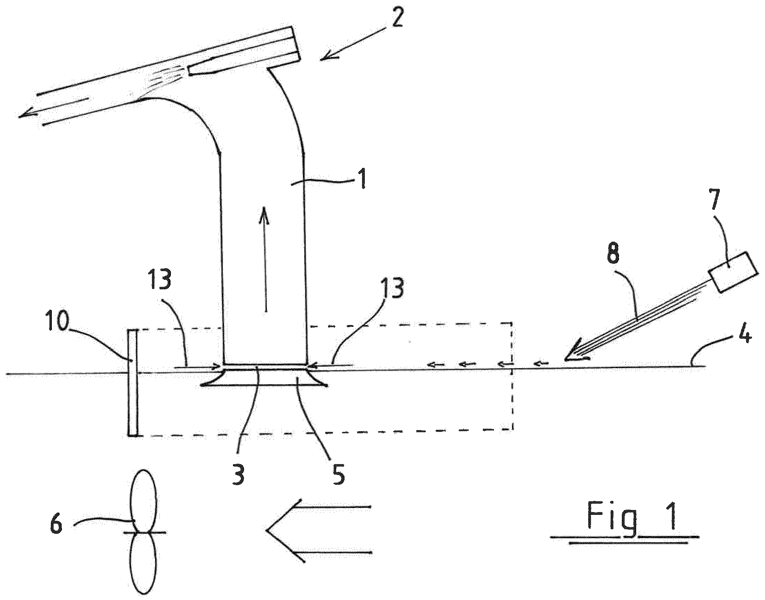

In the following, the invention is described in detail with reference to the accompanying drawings, in which
Fig. 1 shows a schematic lateral view of a purification device according to the invention, and

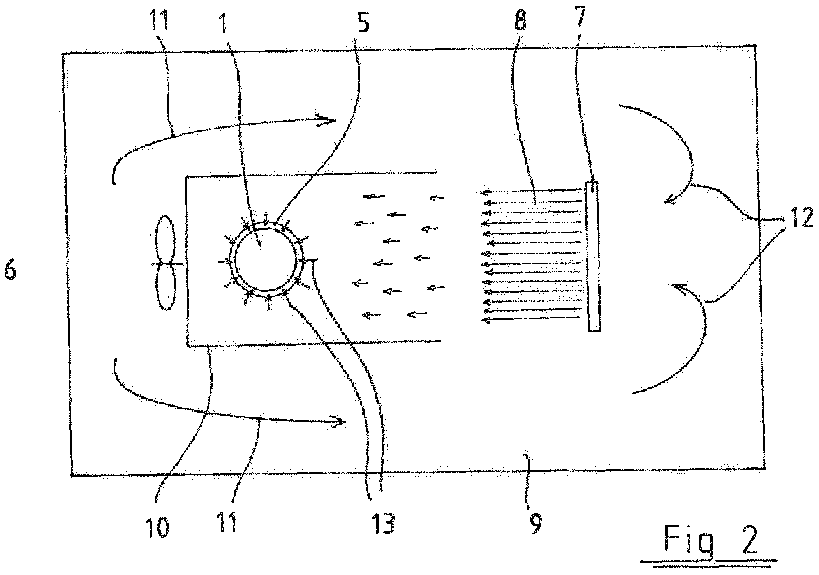

Fig. 2 shows schematically the purification device of Fig. 1 from above.

### DETAILED DESCRIPTION OF THE INVENTION

As shown schematically in the figures, a purification device according to the invention has as the suction device 2 a pneumatic injector pump with a vertical suction canal 1. In the figures, the suction canal is a pipe with round cross-section. The lower end of the suction canal has, extending around it, a rectilinear and uniformly thick suction slit 3, which opens from the pipe outwardly perpendicular to the longitudinal direction of the pipe. Downwards from the lower edge of the suction slit 3, the sheath of the pipe curves uniformly outwards and downwards substantially at a horizontal distance from the suction slit 3 forming a control surface 5. In the vertical direction, the arc-shaped control surface 5 extends below the slit to the entire length of the slit 3.

Further, the purification device has a flow device 6 arranged below the surface 4 of the water, such as a propeller or equivalent, with which the water and, along with it, the impurities on its surface can be made to flow calmly in a desired direction. Additionally, the purification device has an air blowing device 7, such as an air knife, which is arranged to direct the air jet 8 at an oblique angle towards the impurities on the surface of the water. The apparatus is located in a purification basin 9, in which the water to be purified circulates. Further, around the suction canal 1, at a suitable distance from it, are arranged guide walls 10 lying on the surface of the water or extending only to the surface layer of the water and on top of the surface, using which the movements of the impurities moving on the surface of the water are limited.

The purification device functions as follows. When there are impurities on the surface of the water in the purification basin 9, such as oil, the suction canal 1 is lowered vertically into the water such that the surface 4 of the water is at the most just at the level of the lower edge of the suction slit 3 or the surface 4 of the water is somewhat below it. In any case such that water is not free to flow inside the suction slit 3. The suction canal 1 is disposed inside a U-shaped guide wall 10 close to its rear wall. After this, the flow device 6 on the bottom of the purification basin 9, substantially below the suction canal, is turned on, wherein water begins to circulate in the basin according to arrows 11 and 12 circling along the edges and back to the centre. Correspondingly, the impurities on the surface of the water move calmly on the same track and are thus carried into the U-shaped space bordered by the guide walls 10.

At the same time is started the air blowing device 7, which directs a uniform and wide air jet 8 at an oblique angle to the surface 4 of the water in the area of the open end of the U-shaped space. An air jet directed at an adequately oblique angle does not mix the water and impurities, instead presses the impurities forward towards the suction slit 3 increasing the thickness of the impurity layer around the suction slit 3.

When enough impurities have gathered around the suction slit 3, the suction device 2 is started. In this case, in the suction slit 3 is created a powerful suction, which creates around the suction slit to the surface 4 of the water a horizontal air flow 13, which captures impurities in the vicinity of the suction slit that are lighter than water taking these along towards the suction slit and further into the suction device. Thus, the suction device does not need to run continuously, instead preferably at intervals always then, when a thicker impurity layer has gathered around the suction slit. This also assures that from the surface of the water are removed only impurities, not water. Thus, the amount of the collected waste to be removed, being often difficult and expensive to further process, can be minimized.

The invention is above described by means of example with reference to the accompanying drawings without in any way limiting the invention to only the constructions presented. Various embodiments of the invention are thus possible within the scope of the claims.

## Claims

1. A purification device for removing impurities from the surface of the water, which purification device comprises a suction device (2) with a suction canal (1), **characterized in that** the vertical sheath forming the suction canal (1) comprises a vertically narrow and horizontally wide suction slit (3), wherein straight lower edge and upper edges of the suction slit are parallel with the surface of the water and its edges are perpendicular to the surface of the water, the straight and horizontal lower edge of the suction slit (3) being at the level of the surface of the water, and that, below the suction slit, the sheath has an underwater control surface (5) uniformly rising from the horizontal upwards towards the suction slit so that when in use the suction in the suction slit causes parallel with the surface of the water a strong suction air flow to the surface of the water in front of the suction slit, and that the purification device further comprises disposed in the water to be processed, a flow device (6), such as a propeller, to direct the flow of the water towards the suction slit (3) and an air blowing device (7), such as an air knife, arranged to focus an air jet (8) onto the surface (4) of the water to move floating impurities towards the suction slit (3).

2. A purification device according to claim 1, **characterized in that** the suction device (2) is a pneumatic injector pump.

3. A purification device according to any one of claims 1-2, **characterized in that** the purification device is arranged in a purification basin (9) in connection with the water circulation of a processing industry.

## Patentansprüche

1. Reinigungsvorrichtung zum Entfernen von Verunreinigungen von der Wasseroberfläche, die Reinigungsvorrichtung umfassend eine Saugvorrichtung (2) mit einem Saugkanal (1), **dadurch gekennzeichnet, dass** die den Saugkanal (1) ausbildende vertikale Umhüllung eine vertikal enge und horizontal weite Saugblende (3) umfasst, wobei eine gerade untere Kante und obere Kanten der Saugblende parallel zu der Wasseroberfläche sind und deren Kanten rechtwinklig zu der Wasseroberfläche sind, die gerade und horizontal untere Kante der Saugblende (3) auf einer Ebene mit der Wasseroberfläche ist, und dass die Umhüllung unter der Saugblende eine Unterwasserkontrolloberfläche (5) hat, die gleichförmig von der Horizontalen zu der Saugblende ansteigt, sodass im Betrieb das Saugen in die Saugblende einen starken Saugluftstrom parallel zur Wasseroberfläche vor der Saugblende bewirkt, und dass die Reinigungsvorrichtung zur Anwendung im Wasser ferner umfasst, eine Stromvorrichtung (6), wie einen Propeller, um den Wasserstrom zur Saugblende (3) zu leiten und eine Luftblasvorrichtung (7), wie eine Luftbürste, die angeordnet ist, einen Luftstrom (8) auf die Wasseroberfläche (4) zu richten, um schwimmende Verunreinigungen zur Saugblende (3) zu bewegen.

2. Reinigungsvorrichtung nach Anspruch 1, **dadurch gekennzeichnet, dass** die Saugvorrichtung (2) eine pneumatische Injektorpumpe ist.

3. Reinigungsvorrichtung nach einem der vorherigen Ansprüche 1-2, **dadurch gekennzeichnet, dass** die Reinigungsvorrichtung in einem Reinigungsbecken (9) in Verbindung mit einem Wasserkreislauf einer Verfahrensindustrie angeordnet ist.

## Revendications

1. Dispositif de purification pour enlever des impuretés de la surface de l'eau, lequel dispositif de purification comprend un dispositif d'aspiration (2) avec un canal d'aspiration (1), **caractérisé en ce que** la gaine verticale formant le canal d'aspiration (1) comprend une large fente d'aspiration (3) étroite verticalement et large horizontalement, dans lequel le bord inférieur droit et les bords supérieurs de la fente d'aspiration sont parallèles à la surface de l'eau et ses bords sont perpendiculaires à la surface de l'eau, le bord inférieur droit et horizontal de la fente d'aspiration (3) se trouvant au niveau de la surface de l'eau, et **en ce que**, sous la fente d'aspiration, la gaine présente une surface de commande sous-marine (5) s'élevant uniformément de l'horizontale vers la fente d'aspiration de sorte qu'en utilisation, l'aspiration dans l'aspiration la fente provoque, parallèlement à la surface de l'eau, un fort écoulement d'air d'aspiration à la surface de l'eau devant la fente d'aspiration, et **en ce que** le dispositif de purification comprend en outre, disposé dans l'eau à traiter, un dispositif d'écoulement (6), tel qu'une hélice, pour diriger l'écoulement de l'eau vers la fente d'aspiration (3) et un dispositif de soufflage d'air (7), tel qu'une lame pneumatique, agencé pour focaliser un jet d'air (8) sur la surface (4) de l'eau pour déplacer des impuretés flottantes vers la fente d'aspiration (3).

2. Dispositif de purification selon la revendication 1, **caractérisé en ce que** le dispositif d'aspiration (2) est une pompe à injection pneumatique.

3. Dispositif de purification selon l'une quelconque des revendications 1 et 2, **caractérisé en ce que** le dispositif de purification est disposé dans un bassin de purification (9) en liaison avec la circulation de l'eau dans une industrie de traitement.
